# EUROPEAN PATENT SPECIFICATION

(11) **EP 1 699 297 B1**
(45) Date of publication and mention of the grant of the patent: **11.06.2008**
(21) Application number: 04798527.0
(22) Date of filing: 15.11.2004
(51) Int. Cl.: A23G 4/20

(54) **LIQUID-FILLED CHEWING GUMCOMPOSITIONS**
KAUGUMMI MIT FLÜSSIGFÜLLUNG
COMPOSITIONS DE CHEWING-GUM REMPLIES DE LIQUIDE

(30) Priority: 14.11.2003 GB 0326492
(43) Date of publication of application: 13.09.2006
(73) Proprietor: CADBURY SCHWEPPES PLC, London W1J 6HB (GB)
(72) Inventor: BOUDY, Francois, F-86530 Cenon sur Vienne (FR); BUSOLIN, André, F-79390 Thenezay (FR); MENANTEAU, Stéphanie, F-86260 St Pierre de Maille (FR); QUINTARD, Didier, F-86380 Vendeuvre du Poitou (FR)
(74) Representative: Wilson Gunn
(86) International application number: PCT/GB2004/004807
(87) International publication number: WO 2005/048728

(56) References cited:
- EP-A- 0 166 446
- FR-A- 2 011 004
- FR-A- 2 285 078
- GB-A- 1 198 386
- US-A- 4 157 402
- US-A1- 2002 136 812
- US-A1- 2003 026 878
- US-A1- 2003 077 362

## Description

The present invention relates to liquid-filled chewing gum compositions and methods of manufacturing the same.

Liquid-filled chewing gum and other confectionery compositions are known in the art and typically comprise a liquid core material encapsulated within a solid coating of gum or other confectionery.

A common problem with such compositions arises as a result of the tendency for moisture present in the liquid centre and/or the atmosphere to ingress into the solid gum or other confectionery coating over time. This ingress of moisture can be detrimental to the integrity of the composition for a number of reasons. Firstly, the moisture content of the liquid centre will reduce over time as moisture gradually migrates into the surrounding coating and this will in turn cause the liquid fill present in the composition to become gradually less hydrated and more concentrated over time. Secondly, the coating itself will soften as its moisture content increases, which can be detrimental to the appearance and properties (taste, texture etc.) of the coating.

Various attempts to limit the migration of moisture from the liquid core into the solid coating of conventional liquid-filled gum compositions by modifying the composition and properties of the encapsulated liquid are described in United States Patent Numbers 3,894,154 (Graff et al.), 4,156,740 (Glass et al.), 4,157,402 (Ogawa et al.) and 4,466,983 (Cifrese et al.). However, although modifying the composition of the encapsulated liquid can reduce the amount of moisture migration occurring between the liquid core and the coating, a liquid-filled chewing gum/confectionery composition in which the migration of moisture is minimised further, or eliminated altogether, remains desirable.

Furthermore, moisture migration from the liquid core into the solid coating can be a particular problem in chewing gum or other confectionery compositions which comprise a low viscosity liquid filling. Low viscosity liquid fillings can be desirable for certain confectionery products because release of a low viscosity liquid during consumption provides a unique taste sensation. However, the prior art compositions referred to above all seek to increase the viscosity of the liquid fill in order to retard moisture migration. Alternative gum/confectionery compositions which are capable of accommodating any liquid filling, including low viscosity liquids, are desirable.

Conventional processes known in the art for forming centre-filled gum and other confectionery are relatively complex, typically involving the steps of forming the gum or other confectionery coating and then introducing a liquid fill into the centre of the gum or other confectionery by a suitable means. One example of such a process is described in International Patent Publication Number WO 02/15708 and consists of the extrusion of a so-called "rope" of liquid-filled chewing gum from a continuous extruder. This rope of liquid-filled gum is formed into individual pellets by a die assembly, which effectively crimps off individual pieces of gum from the rope. While this and other such processes are effective in continuously forming individual pieces of liquid filled gum, they tend to be complex procedures and require specialised equipment. Furthermore, the size of the gum pieces formed is typically large (generally of the order of 1 to 2 centimetres in length) and problems arise in adapting these processes to produce smaller pieces (e.g. 1.5 grams in weight or less) of liquid-filled gum or other confectionery compositions, which are desirable for certain applications.

The problems referred to above are addressed by the present invention.

According to the present invention there is provided a liquid-filled confectionery composition comprising:
a) a core, wherein the core contains a liquid;
b) an outer coating or shell which encapsulates said core; and
c) an intermediate layer disposed between the core and outer layer;
wherein said core comprises a liquid encapsulated within a water soluble or biodegradable matrix layer and said intermediate layer minimises liquid migrating out of said core, and said outer layer comprises chewing gum.

Such confectionery compositions address the problems associated with the prior art compositions identified above. Specifically, the provision of a liquid-containing core in which the liquid is encapsulated within a water-soluble matrix provides a convenient means by which any suitable liquid fill, including low viscosity liquids, can be incorporated into, and contained within, a confectionery composition. Furthermore, the provision of an intermediate layer which is disposed between the outer coating and the liquid containing core provides a protective barrier which minimises moisture migration out of the core. The barrier provided by the intermediate layer may prevent moisture migration out of the core. Thus, in the final product, the barrier minimises or prevents moisture migrating from the liquid-containing core into the outer coating. Hence, the intermediate layer minimises moisture migration and increases the stability of the composition.

Further, advantageously, this barrier may protect the integrity of the liquid-containing core from moisture present during the application of the outer coating layer or layers, by minimising or even preventing moisture migration into the liquid-containing core.

Furthermore, suitable liquid-containing cores are commercially available. Thus, the intermediate layer and outer layer can be conveniently coated directly onto these commercially available cores using conventional coating techniques. Hence, the drawbacks associated with the techniques for the forming conventional liquid-filled gum or other confectionery compositions can be avoided.

For the avoidance of doubt, the term "core" is used herein to specify the innermost part of the composition. The core may take any suitable shape. The final product formed from the composition may also be of any shape.

The liquid present in the liquid-containing core may be any suitable liquid composition suitable for use in a confectionery composition. In particular, the liquid composition may comprise one or more flavouring agents, which may be natural or synthetic flavouring agents. Illustrative examples of suitable flavouring agents include peppermint and spearmint oils and essences; citrus oils including lemon, orange, lime and grape fruit; fruit essences including apple, peach, pear, apricot, grape, cherry, plum, pineapple and strawberry; and mixtures thereof.

Other ingredients such as sweeteners, softeners and buffering agents may also be present in the liquid. Suitable buffering agents are well known to those skilled in the art, as are suitable sweeteners and softeners. Illustrative examples of suitable sweeteners and the typical ranges in such constituents may be present are described at page 4, line 8, to page 6, line 11, of International Patent Publication No. WO 96/11582. Illustrative examples of suitable softeners that may be present in the compositions of the invention are also provided at page 6, lines 14 to 24, of International Patent Publication No. WO 96/11582.

In certain embodiments, the liquid comprises one or more essential flavour oils.

The water soluble or biodegradable matrix, which encapsulates the liquid to form the liquid-containing core of the composition, may be formed from any suitable water soluble and/or biodegradable matrix-forming material. The matrix may be formed by one or more water soluble hydrocolloids. Illustrative examples of suitable hydrocolloids include gelatin, sodium alginate and mixtures thereof.

Suitable liquid-containing cores are commercially available from major flavour house companies, such as, for example, MANE Fils SA of 620 route de Grasse, 06620 Le bar Sur Loup, France or SYMRISE. These commercially available liquid-containing cores are typically spherical capsules containing one or more flavouring agents, typically essential oils, encapsulated within a gelatin (or another suitable hydrocolloid) matrix. These commercially available liquid-containing cores are generally known in the art as "capsules of flavours" and are obtainable in a range of different sizes and flavours. The size of the pearls of flavours selected for use in the compositions of the present invention will depend on the application concerned and the final size of the confectionery composition required. In certain embodiments of the invention, the pearls of flavour have diameters of between 3 and 10 millimetres and thereby enable small pieces of confectionery to be produced (i.e. confectionery pieces of 1.5 grams or less in weight).

The intermediate layer of the confectionery composition may be any suitable edible layer which, once formed, can minimise moisture migration out of the liquid-containing core. The intermediate layer may be a water impermeable layer, operative to prevent moisture migration into and out of the liquid-containing core. As previously indicated, the intermediate protective layer may perform an important function by minimising moisture contacting the liquid-containing core during the remainder of the manufacture process (i.e. during the subsequent application of a confectionery coating) and thereby adversely affecting the water soluble matrix of the core. It also minimises moisture migrating from the liquid core into the outer confectionery coating during storage. The intermediate layer may be formed by coating the liquid-containing core with a coating solution which does not disturb the integrity of the water soluble or biodegradable matrix of the liquid-containing core. For example, if the matrix is a water soluble matrix, then the intermediate layer may be applied in any suitable non-aqueous solution, such as, for example, an alcohol-based solution.

The intermediate layer may comprise arabic gum. The intermediate layer may comprise maltodextrines or any other suitable binding ingredients. It may also comprise other constituents, such as, for example, a sugar alcohol (e.g. maltitol). The amount of arabic gum present in the intermediate layer may be 100% of the layer.

The intermediate layer may be applied to the liquid-containing core as an alcoholic solution and then dried to yield the intermediate layer.

The intermediate layer may be coated directly onto the surface of the liquid-containing core.

Usually one layer of intermediate protective coating will suffice, although several layers may be present. Where several layers are present, each layer may have the same or a different composition.

The chewing gum coating may comprise any gum base constituents known in the art. Illustrative examples of suitable polymers that can be used as constituents of the gum base can be found at page 7, lines 10 to 24, of International Patent Publication No. WO 96/11582. In embodiments of the invention in which the liquid-containing core is a commercially available pearl of flavour (as discussed above), the gum base typically contains at least one of the following gum base constituents: low and/or high molecular weight polyvinyl acetate; glycerol monostereate; vegetable oils (such as hydrogenated vegetable oil); microcrystalline petroleum wax or paraffin wax. The composition may comprise a mixture of some or all of the aforementioned constituents.

The amounts of polymer utilised in the gum base will depend on the properties of the gum base desired. Typical amounts of polymer found in the gum base are disclosed at page 7, lines 25 to 34, of International Patent Publication No. WO 96/11582.

The gum base may further comprise one or more additional agents such as, for example, sweeteners, elastomer solvents, emulsifiers, plasticizers, softeners, fillers, colouring agents, flavouring agents, antioxidants, and mixtures thereof. Illustrative examples of such agents and the typical ranges in which they may be employed can be found at page 8, line 1, to page 11, line 13 of International Patent Publication No. WO 96/11582.

In embodiments of the invention where the liquid-containing core is a commercially available capsule of flavour, the gum base may comprise one or more intense sweetening agents that provide a long lasting sweetening effect. Examples of such sweeteners include aspartame and acesulfam K.

In embodiments where the composition comprises a fruit flavour (in the liquid core and/or the outer chewing gum base), then flavour enhancers such as citric acid, for example, may also be incorporated into the gum base.

In some embodiments, the gum base may comprise various hydrocolloids, polyols and/or mixtures thereof.

The gum base may constitute anywhere between 5 and 90%, such as between 10 and 80%, of the entire confectionery/chewing gum composition. The actual percentage of gum base present will depend on the individual confectionery composition concerned.

The chewing gum coating may be further coated with an additional confectionery layer in order to provide a hard outer shell. Any suitable hard outer coating layer, such as a sugar or sugar alcohol-based coating, or a mixture thereof, may be used. Examples of suitable sugar alcohols that may be used to form the additional confectionery layer include sorbitol, xylitol, maltitol, isomalt and lactitol. The aforementioned sugar alcohols may be used alone or in admixture with one another.

The additional confectionery layer may optionally comprise any other suitable constituents, such as, for example, gelatin and arabic gum.

The compositions of the present invention may be of any shape or form that is desired.

According to a second aspect of the present invention there is provided a method of making a confectionery composition as defined herein, said method comprising the steps of:
(1) providing a core, wherein said core contains a liquid;
(2) coating said core with said intermediate layer; and
(3) coating the product of the step (2) with an outer layer.

The compositions of the invention can be conveniently formed by the application of the intermediate, protective, layer coating to the liquid-containing core, followed by the application of the outer coating. Each coating step may be performed more than once, if so desired, to provide several individual layers of a given coating.

The coating process may be carried out as a batch process or a continuous coating process.

Any suitable coating technique may be used. For instance, the coating steps may be carried out by using conventional pan coating techniques. Once a coating solution has been applied, the coated compositions are then dried to yield the coated layer before the next coating step is commenced.

As previously indicated, the intermediate protective coating layer formed in step (2) above may be applied as a coating solution which does not disturb the integrity of the water soluble or biodegradable matrix of the liquid-containing core. Therefore, in embodiments where the matrix of the liquid core is a water soluble matrix, the use of an aqueous coating solution must be avoided.

This method could further comprise an additional step in which a chewing gum coating is prepared for application in step (3) of the coating process defined above. The chewing gum coating may comprise granules of chewing gum base, which may be prepared by a granulation process. Said granulation process may comprise the following steps:
(a) mixing the gum base ingredients to form the required gum base composition; and
(b) cooling the gum base composition formed in step (a) and grinding the gum base into granules.

The mixing of the gum base ingredients may be carried out at any suitable temperature, although the temperature is typically below 70°C when the flavours are added to the gum base composition.

The gum base composition may be mixed by introducing the constituents into a kneader. This can be carried out as a continuous process or as a batch process.

Similarly, any suitable grinding process, such as the use of a knife grinder, may be used to reduce the gum base into granules.

Once formed, the granules of gum base may then be subjected to an additional screening step to select granules within a desired size range for use in the coating process. The screening is usually carried out by passing the granules through a mesh. Granules of less than 1000 microns in size may be used, such as granules of less than 500 microns.

The chewing gum coating is applied to the liquid-containing core which has been coated by the intermediate layer formed by step (2). The chewing gum base granules may be dispersed into a suitable coating solution. Any suitable coating solution will suffice. The coating solution may comprise, in addition to the gum base granules, one or more hydrocolloids, such as arabic gum, and/or one or more polyols, or a mixture thereof. The coating step may be repeated several times until the required amount of gum coating has been deposited.

The process of producing the compositions of the invention may optionally include an additional step whereby any gaps between the individual granules of gum base forming the gum coating layer prepared in step (3) are filled by the application of a fine powder that disperses into said gaps and thereby increases the uniformity and continuity of the gum coating layer. Any suitable fine powder may be used for this purpose, such as, for example, a powdered polyol or icing sugar.

In embodiments of the invention in which the outer gum coating is further coated with a hard outer confectionery shell, the method of the present invention may further comprise an additional step in which the chewing gum coating formed in step (3) above is coated again to provide with said hard outer confectionery shell. Any suitable hard confectionery shell composition known in the art may be used in the compositions of the present invention. The outer shell may be formed from a sugar alcohol, such as maltitol, and may be applied by introducing a sugar alcohol syrup to coat the external surface of the outer confectionery/chewing gum layers of the composition produced in step (3). The sugar alcohol syrup is then dried to yield the hard outer confectionery shell.

The hard outer confectionery shell present in certain embodiments of the invention provides a smooth surface which can be cleaned and polished to provide an elegant finish to the compositions of the invention, if desired.

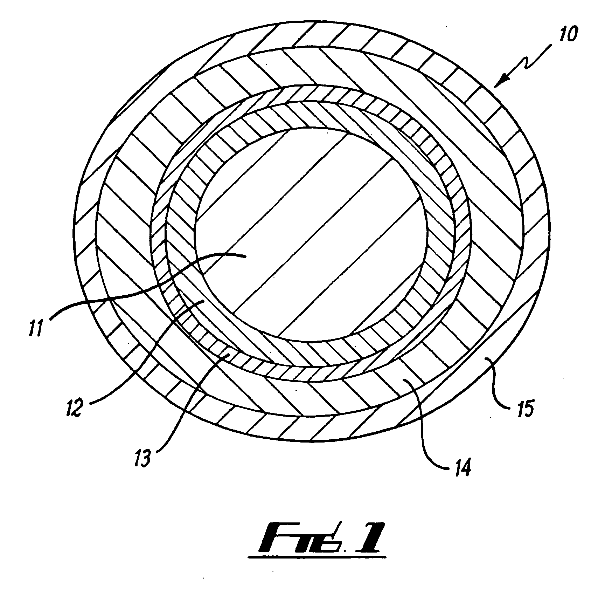

How an aspect of the present invention may be put into practice will now be described further in reference to the accompanying Fig. 1, which shows a diagrammatic illustration of a cross-section taken through an exemplary composition 10 of the present invention. In Fig. 1, a capsule of flavouring comprises flavours 11 encapsulated in a gelatin capsule 12. An Arabic gum intermediate protective layer 13 is applied, in alcohol, to the exterior of the gelatin capsule 12. This intermediate layer is sequentially coated with a gum base coating 14 and a hard coating 15.

A typical formulation of one embodiment of the composition 10 as depicted in Fig. 1 is set out below:

| Component | % weight | Reference numeral in Fig. 1 |
|---|---|---|
| Flavour | 13.1 | 11 |
| Gelatin | 1.7 | 12 |
| Arabic gum | 0.8 | 13 |
| Gum base | 35.7 | 14 |
| Solution gum Arabic | 14.0 | 14 |
| Maltitolp200 | 30.0 | 14 |
| Maltitol | 4.7 | 15 |

The following further non-limiting Example is provided by way of illustration only.

### Example

### 1. Formation of the gum base

A gum base having the following composition was mixed in a continuous kneader:

| **Ingredients** | **% by weight of the gum base** |
|---|---|
| Polyvinyl acetate low molecular weight - grade 1.5 | 80.90 |
| Aspartame | 1.43 |
| Acesulfame K | 0.51 |
| Hydrogenated vegetable oil | 12.25 |
| Glycerol monostearate | 0.91 |
| Liquid flavour (peppermint oil) | 4.0 |

The gum composition was then ground into granules and sieved to yield granules of less than 500 microns.

### 2. Formation of the intermediate protective layer

To a commercially sourced liquid-containing core, namely capsules of flavours obtained from MANE Fils SA, 620 route de Grasse, 06620 Le bar Sur Loup France, an alcohol-based coating solution of maltitol P200 mixed with arabic gum (40/60) was added in a pan coater and agitated to form a continuous coating layer over the pearls of flavours. Only one layer (formed by a single application of the coating solution) was carried out.

### 3. Formation of the gum coating layer

The gum base granules prepared in step 1 above were mixed with a solution of arabic gum and applied in six successive applications to the product of step 2 above.

Maltitol powder is used to smooth the surface and fill any gaps between the gum base granules.

### 4. Formation of an outer hard confectionery shell

The outer shell is formed by the application of 15 coating layers of maltitol solution at 35°C.

The final product was then washed and polished.

The resultant chewing gum spheres contain 28% gum base per ball.

## Claims

1. A liquid-filled confectionery composition comprising:
(a) a core, wherein the core contains a liquid;
(b) an outer coating or shell which encapsulates said core; and
(c) an intermediate layer disposed between said core and said outer coating;
wherein said core comprises a liquid encapsulated within a water soluble or biodegradable matrix layer and said intermediate layer minimises liquid migrating out of said core, and said outer layer comprises chewing gum.

2. A composition according to claim 1, wherein said intermediate layer prevents liquid migrating out of said core.

3. A composition according to claim 1 or claim 2, wherein said intermediate layer also minimises liquid migrating into said core.

4. A composition according to claim 3, wherein said intermediate layer prevents liquid migrating into said core.

5. A composition according to any of the preceding claims, wherein the liquid present in the core comprises one or more natural or synthetic flavouring agents.

6. A composition according to any of the preceding claims, wherein the matrix layer of the core comprises one or more water soluble hydrocolloids.

7. A composition according to any of the preceding claims, wherein the core has a diameter of between 3 and 10 mm.

8. A composition according to any of the preceding claims, wherein the intermediate layer comprises arabic gum.

9. A composition according to claim 8, wherein the intermediate layer is entirely composed of arabic gum.

10. A composition according to any of the preceding claims, wherein the composition has a weight of 1.5 grams or less.

11. A composition according to any of the preceding claims, wherein the chewing gum comprises granules of chewing gum base.

12. A composition according to any of the preceding claims, wherein said outer layer is further coated with an additional layer in order to provide an outer shell of greater hardness than the said outer layer.

13. A composition according to claim 12, wherein the outer shell comprises at least one of sugar or sugar alcohol.

14. A composition according to claim 13, wherein the sugar alcohol is maltitol.

15. A composition according to any of the preceding claims, wherein said composition is manufactured by a method comprising the steps of:
(a) providing the core;
(b) coating said core with one or more intermediate layers; and
(c) coating the resulting product with one or more outer layers.

16. A method of manufacture of a liquid-filled confectionery composition as described in any of the preceding claims, said method comprising the steps of:
(a) providing a core, wherein said core contains a liquid;
(b) coating said core with one or more intermediate layers; and
(c) coating the resulting product with one or more outer layers.

17. A method according to claim 16, wherein the intermediate layer is formed by coating the core with a solution which does not disturb the integrity of the matrix of the core.

18. A method according to claim 17, wherein the matrix of the core is water soluble and the intermediate layer is applied in a non-aqueous solution.

19. A method according to any of claims 16 to 18, wherein the outer layer comprises granules of chewing gum base prepared by a granulation process, said granulation process comprising the steps of:
(a) mixing gum base ingredients to form the required gum base composition; and
(b) cooling the gum base composition and grinding the gum base into granules.

20. A method according to claim 19, wherein the chewing gum granules are selected to be less than 1000 µm in diameter.

21. A method according to claim 20, wherein the chewing gum granules are selected to be less than 500 µm in diameter.

22. A method according to any of claims 16 to 21, wherein the outer layer comprises a chewable confectionery composition which is coated with a further layer to provide an outer shell, said shell being of greater hardness than said outer layer, said further layer being formed by coating the external surface of the chewable confectionery composition with at least one of a sugar or sugar alcohol syrup, followed by drying.

## Patentansprüche

1. Flüssiggefüllte Konfektzusammensetzung mit:
a) einem Kern, wobei der Kern eine Flüssigkeit enthält;
b) einer äußeren Beschichtung oder Hülle, welche den Kern einkapselt; und
c) einer mittleren Schicht, die zwischen dem Kern und der äußeren Beschichtung angeordnet ist,
wobei der Kern eine Flüssigkeit enthält, die innerhalb einer wasserlöslichen oder biologisch abbaubaren Matrixschicht eingekapselt ist, und die mittlere Schicht ein Austreten von Flüssigkeit aus dem Kern minimiert, und die äußere Schicht Kaugummi enthält.

2. Zusammensetzung nach Anspruch 1, wobei die mittlere Schicht ein Austreten von Flüssigkeit aus dem Kern verhindert.

3. Zusammensetzung nach Anspruch 1 oder 2, wobei die mittlere Schicht auch ein Eintreten von Flüssigkeit in den Kern minimiert.

4. Zusammensetzung nach Anspruch 3, wobei die mittlere Schicht ein Eintreten von Flüssigkeit in den Kern verhindert.

5. Zusammensetzung nach einem der vorstehenden Ansprüche, wobei die Flüssigkeit, die in dem Kern vorliegt, einen oder mehrere natürliche oder synthetische Duftstoffe enthält.

6. Zusammensetzung nach einem der vorstehenden Ansprüche, wobei die Matrixschicht des Kerns ein oder mehrere wasserlösliche Hydrokolloide enthält.

7. Zusammensetzung nach einem der vorstehenden Ansprüche, wobei der Kern einen Durchmesser zwischen 3 und 10 mm aufweist.

8. Zusammensetzung nach einem der vorstehenden Ansprüche, wobei die mittlere Schicht Gummi arabicum enthält.

9. Zusammensetzung nach Anspruch 8, wobei die mittlere Schicht vollständig aus Gummi arabicum zusammengesetzt ist.

10. Zusammensetzung nach einem der vorstehenden Ansprüche, wobei die Zusammensetzung ein Gewicht von 1,5 Gramm oder weniger aufweist.

11. Zusammensetzung nach einem der vorstehenden Ansprüche, wobei der Kaugummi Körnchen aus Kaugummigrundstoff enthält.

12. Zusammensetzung nach einem der vorstehenden Ansprüche, wobei die äußere Schicht ferner mit einer zusätzlichen Schicht beschichtet ist, um eine äußere Hülle mit einer größeren Härte als die der äußeren Schicht bereitzustellen.

13. Zusammensetzung nach Anspruch 12, wobei die äußere Hülle zumindest einen Zucker oder einen Zuckeralkohol enthält.

14. Zusammensetzung nach Anspruch 13, wobei der Zuckeralkohol Maltitol ist.

15. Zusammensetzung nach einem der vorstehenden Ansprüche, wobei die Zusammensetzung durch ein Verfahren mit den Schritten hergestellt wird:
a) Bereitstellen des Kerns;
b) Beschichten des Kerns mit einer oder mehreren mittleren Schichten; und
c) Beschichten des sich ergebenden Produktes mit einer oder mehreren äußeren Schichten.

16. Verfahren zur Herstellung einer flüssig gefüllten Konfektzusammensetzung, wie in einem der vorstehenden Ansprüche beschrieben, wobei das Verfahren die Schritte aufweist:
a) Bereitstellen eines Kerns, wobei der Kern eine Flüssigkeit enthält;
b) Beschichten des Kerns mit einer oder mehreren mittleren Schichten; und
c) Beschichten des sich ergebenden Produktes mit einer oder mehreren äußeren Schichten.

17. Verfahren nach Anspruch 16, wobei die mittlere Schicht durch Beschichten des Kerns mit einer Lösung gebildet wird, die die Unversehrtheit der Matrix des Kerns nicht stört.

18. Verfahren nach Anspruch 17, wobei die Matrix des Kerns wasserlöslich ist, und die mittlere Schicht in einer nichtwässrigen Lösung aufgetragen wird.

19. Verfahren nach einem der Ansprüche 16 bis 18, wobei die äußere Schicht Körnchen aus Kaugummigrundstoff, die durch ein Granulierungsverfahren hergestellt werden, aufweist, und das Granulierungsverfahren die Schritte aufweist:
a) Vermischen der Gummigrundstoffbestandteile, um die benötigte Gummigrundstoffzusammensetzung zu bilden; und
b) Kühlen der Gummigrundstoffzusammensetzung und Mahlen des Gummigrundstoffes zu Körnchen.

20. Verfahren nach Anspruch 19, wobei die Kaugummikörnchen mit einem Durchmesser von weniger als 1000 µm ausgewählt werden.

21. Verfahren nach Anspruch 20, wobei die Kaugummikörnchen mit einem Durchmesser von weniger als 500 µm ausgewählt werden.

22. Verfahren nach einem der Ansprüche 16 bis 21, wobei die äußere Schicht eine kaubare Konfektzusammensetzung enthält, die mit einer weiteren Schicht beschichtet ist, um eine äußere Hülle bereitzustellen, und die Hülle eine größere Härte als die äußere Schicht aufweist, und die weitere Schicht durch Beschichten der äußeren Oberfläche der kaubaren Konfektzusammensetzung mit zumindest einem Zucker oder einem Zuckeralkoholsirup, gefolgt von Trocknen, gebildet wird.

## Revendications

1. Composition de confiserie remplie d'un liquide comprenant :
(a) un noyau, lequel noyau contient un liquide ;
(b) un enrobage ou une coquille externe qui encapsule ledit noyau ; et
(c) une couche intermédiaire disposée entre ledit noyau et ledit enrobage externe ;
dans laquelle ledit noyau comprend un liquide encapsulé dans une couche de matrice hydrosoluble ou biodégradable et ladite couche intermédiaire minimise la migration du liquide hors dudit noyau, et ladite couche externe comprend une gomme à mâcher.

2. Composition selon la revendication 1, dans laquelle ladite couche intermédiaire empêche la migration du liquide hors dudit noyau.

3. Composition selon la revendication 1 ou la revendication 2, dans laquelle ladite couche intermédiaire minimise également la migration du liquide à l'intérieur dudit noyau.

4. Composition selon la revendication 3, dans laquelle ladite couche intermédiaire empêche la migration du liquide à l'intérieur dudit noyau.

5. Composition selon l'une quelconque des revendications précédentes, dans laquelle le liquide présent dans le noyau comprend un ou plusieurs agents aromatisants naturels ou synthétiques.

6. Composition selon l'une quelconque des revendications précédentes, dans laquelle la couche de matrice du noyau comprend un ou plusieurs hydrocolloïdes hydrosolubles.

7. Composition selon l'une quelconque des revendications précédentes, dans laquelle le noyau a un diamètre compris entre 3 et 10 mm.

8. Composition selon l'une quelconque des revendications précédentes, dans laquelle la couche intermédiaire comprend de la gomme arabique.

9. Composition selon la revendication 8, dans laquelle la couche intermédiaire est composée entièrement de gomme arabique.

10. Composition selon l'une quelconque des revendications précédentes, dans laquelle la composition a un poids inférieur ou égal à 1,5 grammes.

11. Composition selon l'une quelconque des revendications précédentes, dans laquelle le gomme à mâcher comprend des granules de base de gomme à mâcher.

12. Composition selon l'une quelconque des revendications précédentes, dans laquelle ladite couche externe est en outre enrobée d'une couche supplémentaire afin de fournir une coquille externe ayant une dureté supérieure à celle de ladite couche externe.

13. Composition selon la revendication 12, dans laquelle la coquille externe comprend au moins l'un des constituants suivants, à savoir un sucre ou un alcool de sucre.

14. Composition selon la revendication 13, dans laquelle l'alcool de sucre est le maltitol.

15. Composition selon l'une quelconque des revendications précédentes, dans laquelle ladite composition est fabriquée à l'aide d'un procédé comprenant les étapes consistant à :
(a) fournir le noyau ;
(b) enrober ledit noyau d'une ou plusieurs couches intermédiaires ; et
(c) enrober le produit résultant d'une ou plusieurs couches externes.

16. Procédé de fabrication d'une composition de confiserie remplie d'un liquide telle que décrite dans l'une quelconque des revendications précédentes, ledit procédé comprenant les étapes consistant à :
(a) fournir un noyau, lequel noyau contient un liquide ;
(b) enrober ledit noyau d'une ou plusieurs couches intermédiaires ; et
(c) enrober le produit résultant d'une ou plusieurs couches externes.

17. Procédé selon la revendication 16, dans lequel la couche intermédiaire est formée en enrobant le noyau d'une solution qui ne perturbe pas l'intégrité de la matrice du noyau.

18. Procédé selon la revendication 17, dans lequel la matrice du noyau est hydrosoluble et la couche intermédiaire est appliquée dans une solution non aqueuse.

19. Procédé selon l'une quelconque des revendications 16 à 18, dans lequel la couche externe comprend des granules de base de gomme à mâcher préparés à l'aide d'un procédé de granulation ; ledit procédé de granulation comprenant les étapes consistant à :
(a) mélanger les ingrédients de la base de gomme pour former la composition de base de gomme requise ; et
(b) refroidir la composition de base de gomme et broyer la base de gomme en granules.

20. Procédé selon la revendication 19, dans lequel les granules de gomme à mâcher sont choisis pour avoir un diamètre inférieur à 1000 µm.

21. Procédé selon la revendication 20, dans lequel les granules de gomme à mâcher sont choisis pour avoir un diamètre inférieur à 500 µm.

22. Procédé selon l'une quelconque des revendications 16 à 21, dans lequel la couche externe comprend une composition de confiserie à mâcher qui est enrobée d'une autre couche pour fournir une coquille externe, ladite coquille présentant une dureté supérieure à celle de ladite couche externe, ladite autre couche étant formée par enrobage de la surface externe de la composition de confiserie à mâcher avec au moins l'un des constituants suivants, à savoir un sucre ou un sirop d'alcool de sucre, puis par séchage.
